**Europäisches Patentamt**

**European Patent Office**

**Office européen des brevets**

(19)

(11) Veröffentlichungsnummer : **0 331 893 B1**

(12)

# EUROPÄISCHE PATENTSCHRIFT

(45) Veröffentlichungstag der Patentschrift :
**30.09.92 Patentblatt 92/40**

(51) Int. Cl.⁵ : **A01D 41/14, A01D 75/28**

(21) Anmeldenummer : **89101400.3**

(22) Anmeldetag : **27.01.89**

(54) **Vorrichtung zur Lageregelung eines Mähwerkes.**

(30) Priorität : **09.03.88 DE 3807610**

(43) Veröffentlichungstag der Anmeldung :
**13.09.89 Patentblatt 89/37**

(45) Bekanntmachung des Hinweises auf die
Patenterteilung :
**30.09.92 Patentblatt 92/40**

(84) Benannte Vertragsstaaten :
**BE DE FR GB IT**

(56) Entgegenhaltungen :
**DE-A- 3 133 089**
**DE-A- 3 230 330**
**DE-A- 3 522 699**
**DE-C- 3 332 763**
**US-A- 4 612 757**

(73) Patentinhaber : **CLAAS OHG**
**Münsterstrasse 33**
**W-4834 Harsewinkel 1 (DE)**

(72) Erfinder : **Diekhans, Norbert, Dr.-Ing.**
**Sebastianweg 19**
**W-4830 Gütersloh 11 (DE)**
Erfinder : **Fitzner, Werner, Dipl.-Ing.**
**Uhlenbrink 26**
**W-4414 Sassenberg (DE)**
Erfinder : **Ostrup, Heinrich, Dipl.-Ing.**
**Leipziger Strasse 35**
**W-4834 Harsewinkel (DE)**

(74) Vertreter : **Hanewinkel, Lorenz, Dipl.-Phys.**
**Patentanwalt Ferrariweg 17a**
**W-4790 Paderborn (DE)**

EP 0 331 893 B1

## Beschreibung

Die Erfindung betrifft eine Regelvorrichtung an einer selbstfahrenden Erntemaschine mit einem Mähtisch, der höhenveränderlich und quer zur Fahrtrichtung hydraulisch gesteuert verschwenkbar ist und seitlich Bodenabtaster aufweist, deren Bodenabstandssignale einer Steuervorrichtung zur Regelung einer Verschwenkung quer zur Fahrtrichtung zugeführt werden.

Aus DE-A 35 22 699 ist eine selbstfahrende Erntemaschine bekannt, an der frontseitig ein Mähtisch angeordnet ist, der die Bodenkontur abtastende Fühler aufweist, deren Signale den Mähtisch hydraulisch geregelt jeweils quer und/oder längs zur Fahrtrichtung verschwenkt.

Weiterhin ist Aus DE-A 32 30 330 eine selbstfahrende Erntemaschnine mit einem in Fahrtrichtung durch einen Bodendruckmelder zwecks Schnitthöheneinstellung hydraulisch geregelt verschwenkbaren Mähtisch bekannt.

Weiterhin ist aus DE-C 33 32 763 ein Mähdrescher mit einem Neigungsmelder bekannt, der einer hydraulischen Steuerung einer Betätigungsvorrichtung eines Obersiebes zwecks einer gleichmäßigen Erntegutverteilung in einer hin- und herschwingenden Förder- und Reinigungsvorrichtung dient.

Diese vorbekannten Erntemaschinen haben den Nachteil, daß die Regelvorrichtung für das Mähtischverschwenken, die Schnitthöheneinstellung und die Erntegutverteilung völlig unabhängig voneinander arbeiten, und daß es deshalb wegen der unterschiedlichen Regelzeitkonstanten der Regelkreise zu störenden Koppelschwingungen kommen kann, was insbes. bei schnellem Fahren und auf weichem und/oder welligem Boden keinen gleichmäßig kurzen Schnitt ermöglicht und die Gefahr eines Festfahrens oder einer Mähbalkenbeschädigung mit sich bringt.

Es ist Aufgabe der Erfindung, eine selbstfahrende Erntemaschine zu offenbaren, die eine hohe Ernteleistung mit einer gleichmäßigen kurzen Schnitthöhe auch bei hängigem, weichem und welligem Boden erbringt.

Die Lösung der Aufgabe ist dadurch gegeben, daß die Differenz der Bodenabstandssignale zu der Regelung der Verschwenkung genutzt wird und der Mittelwert der Bodenabstandssignale als Ist-Wert-Anteil zu einer Regelung einer Schnitthöhe des Mähtisches dient.

Vorteilhafte Ausgestaltungen sind in den Unteransprüchen angegeben.

Es hat sich als besonders vorteilhaft gezeigt, gruppenweise mehrere Bodenabtaster jeweils beidseitig des Mähtisches anzuordnen und bezüglich der maximalen Auslenkung der jeweiligen Gruppen die Regelung vorzunehmen, da auf diese Weise zur Fahrtrichtung längslaufende Bodenrinnen oder -furchen unwirksam sind und ein zu tiefes Absenken der Mähwerksmesser vermieden wird.

Weiterhin hat es sich vorteilhaft erwiesen, für die Schnitthöhenregelung das Ist-Signal zu einem überwiegenden Teil aus einem Bodendrucksignal des Mähtisches und zu einem geringen Teil, z.B. zu etwa 20%, aus dem Mittelwert der Bodenabtaster zu gewinnen und den Bodendruck in eine vorgegebenen Arbeitsbereich in einer Feder elastisch aufzunehmen, wodurch Regelschwingungen der Schnitthöhen-Regelung durch relativ kurze Bodenwellen verhindert werden.

Die Vergleicher der Regler sind mit einer Hysterese versehen, die eine Überlastung der Hydraulikstellglieder bei engwelligem Boden ausschaltet. Die Stellglieder sind zusätzlich gegen Überlastung durch thermische Schutzschalter gegen Zerstörung gesichert.

Da es im Arbeitsbereich einer Erntemaschine auch solche Hindernisse geben kann, die eine jeweils vorgegebene Stoppelhöhe überragen z.B. Steine Gräben, Tiere usw., ist eine Übersteuerungsmöglichkeit der Regelung vorgesehen, wobei der ursprünglich vorgegebene Sollwert der Schnitthöhe erhalten bleibt und somit nach Überwindung des Hindernisses nicht erneut eingestellt werden muß. Die Übersteuerungs-Taster sind vorteilhaft auch für einen permanenten Handbetrieb geeignet. so daß auch bei fehlender oder defekter Regelvorrichtung ein Notbetrieb möglich ist.

In vorteilhafter Weise läßt sich auch der Neigungsmelder, der der Regelung der Siebvorrichtung dient, anstelle der Bodenabtaster zur Regelung der seitlichen Verschwenkung des Mähtisches verwenden, z.B. wenn einer der Bodenabtaster beschädigt ist oder wenn eine verhältnismäßig hohe Stoppelhöhe vorgegeben ist, so daß sich eine Bodenabtastung erübrigt. Sofern stets eine Bodenabtastung vorgesehen ist, läßt sich umgekehrt der Neigungsmelder einsparen, wobei die Siebvorrichtung mit dem Differenzsignal der Bodenabtaster geregelt wird.

Besonders vorteilhaft läßt sich die Regelvorrichtung mittels eines Mikroprozessors ausgestalten, da in diesem die eingegebenen Ist-Werte bezüglich eines bestimmten vorgegebenen Arbeitsbereiches in einfacher Weise auswertbar sind. Darüberhinaus wird der jeweilige Hysteresebereich und die Totzeit des Soll-Istwertvergleichs jeweils geeignet vorgegeben und variiert. Diese Vorgaben und die Veränderungen der jeweils dadurch bewirkten Regelcharakteristik werden vorteilhaft aus den jeweils auftretenden Reaktionen der Regelvorrichtung abgeleitet, z.B. aus der Periodizität oder der Nähe der Grenzlast, und außerdem abhängig von den Arbeitsverhältnissen, wie Fahrgeschwindigkeit, Bodenwelligkeit, Schnitthöhe usw. optimal ermittelt.

Vorteilhaft wird dadurch auf einfache Weise eine Proportional-Integral-Differenzial-Regelcharakteristik mit dynamischer Parameteranpassung erreicht.

Die Eingabe des Sollwertes für die Schnitthöhe und anderer Betriebsparameter für die Regelcharakteristik durch den Bediener läßt sich durch eine Zeitüberwachung von Bedien Kontakten in einfacher Weise ohne Analogwertgeber vornehmen.

Die Funktion der Regelkreise wird vorteilhat durch eine Reaktionszeitüberwachung und durch Überwachung der Abtasterund Gebersignale auf deren Lage im jeweiligen Arbeitsbereich ständig überprüft, und im Störungsfall wird automatisch auf eine Hilfsfunktion zurückgegriffen. Die Istwert-Potentiometer sind bezüglich des vorgegebenen mechanischen Einstellbereiches so dimensioniert, daß der zugehörige elektrische Verstellbereich nicht den vollen Arbeitsbereich von 0 bis 100% der Versorgungsspannung, sondern nur einen Teilbereich von etwa 5 bis 95% umfaßt. Liegen die gemessenen Istwerte trotzdem außerhalb dieses Verstellbereiches, so liegt eine Störung z.B. ein Leitungsbruch oder eine Beschädigung der mechanischen Abtast- oder Kopplungsglieder vor, was überprüft und erkannt wird, worauf das entsprechende Geberpotentiometer aus der weiteren Auswertung eliminiert wird. Der jeweilige Arbeitsbereich der Abtaster und Geber wird automatisch erfaßt und für die Überwachung und Auswertung gespeichert. Sporadische Störungen werden statistisch erfaßt und zur Abfragung bereitgestellt.

Anhand der Fig. 1 bis 6 sind vorteilhafte Ausgestaltungen dargestellt.

Fig. 1 zeigt eine Erntemaschine ausschnittsweise perspektivisch als Röntgendarstellung:

Fig. 2 zeigt eine weitere Detailausführung eines Bodentasters:

Fig. 3 zeigt eine Reglerschaltung in Analogtechnik;

Fig. 4 zeigt ein Blockschaltbild einer Digitalsteuervorrichtung;

Fig. 5 zeigt ein Flußdiagramm einer Regelstrecke:

Fig. 6 zeigt ein Flußdiagramm einer Adaptionsfunktion.

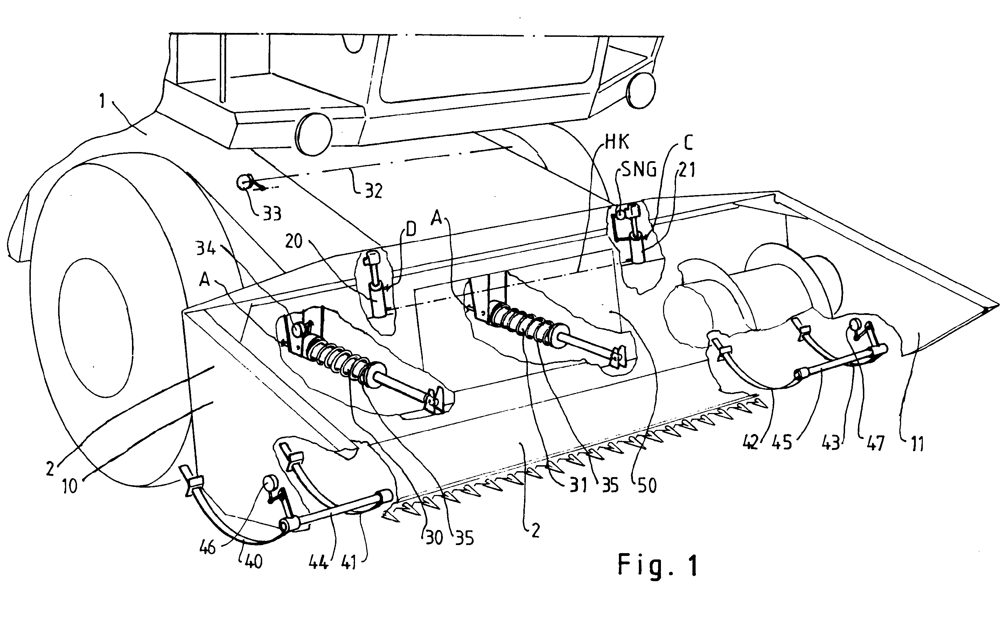

Fig. 1, eine selbstfahrbare Erntemaschine (1) mit einem Mähtisch (2), der mittels hydraulischer Schwenker (20, 21) um die Mittelachse der Erntemaschine (1) verschwenkbar und in engen Grenzen höhenverschieblich ist. Die Hydraulikzylinder der Schwenker (20, 21) sind über eine Koppelleitung (HK) in Serie geschaltet. Sie werden über Steurventile an den spiegelbildlichen Anschlüssen (C, D) zum Schwenken wechselseitig beaufschlagt. Weiterhin ist der Mähtisch (2) mittels parallel geschalteter Hydraulikzylinder (30, 31) um eine Schwenkachse (32) höhenverschwenkbar. An den beiden Seitenwänden (10, 11) sind elastische Bodenabtaster (40, 41; 42, 43) angeordnet, die jeweils paarweise über eine drehbar gelagerte Verbundwelle (44, 45) mit einem Abtasterpotentiometer (46, 47) gekoppelt sind.

Durch die Elastizität der Bodenabtastbügel (40, 41; 42, 43) wird deren Anpassung an ein mittleres Bodenniveau erbracht. Die Parallelanordnung der Bügel über die Wellen (44, 45) in einem Abstand, der zweckmäßg größer als die übliche Spurbreite eines Reifens einer Landmaschine und größer als eine Furchenbreite ist, wird jeweils die maximale Bodenhöhe gemeldet, und eine Reifenspur, eine Furche oder ein enges Loch bleibt unwirksam.

Die Höhenverschwenkung des Mähtisches (2) bezüglich des Fahrzeuges wird durch ein Höhenpotentiometer (33) gemeldet. Weiterhin wird der Bodendruck durch ein Bodendruck-Potentiometer (34) signalisiert, das jeweils der Verformung der Stützfedern (35) der Hydraulikzylinder (30, 31) gemäß eingestellt ist. Alternativ kann der Bodendruck auch mittels eines Druckaufnehmers von der Hydraulikleitung (A) der Hydraulikzylinder (30, 31) gewonnen werden. Die Ährenheber und Schnittgutförderer sind nur rudimentär dargestellt. Das Schnittgut wird durch den Förderschacht (50) in die Dreschvorrichtung gefördert, wo die Siebvorrichtung angeordnet ist, die nicht dargestellt ist. An dieser befindet sich ein pendelbetätigter Lagemelder für das Fahrzeug (1) und ein gesteuert hydraulisch verstellbarer Siebantrieb.

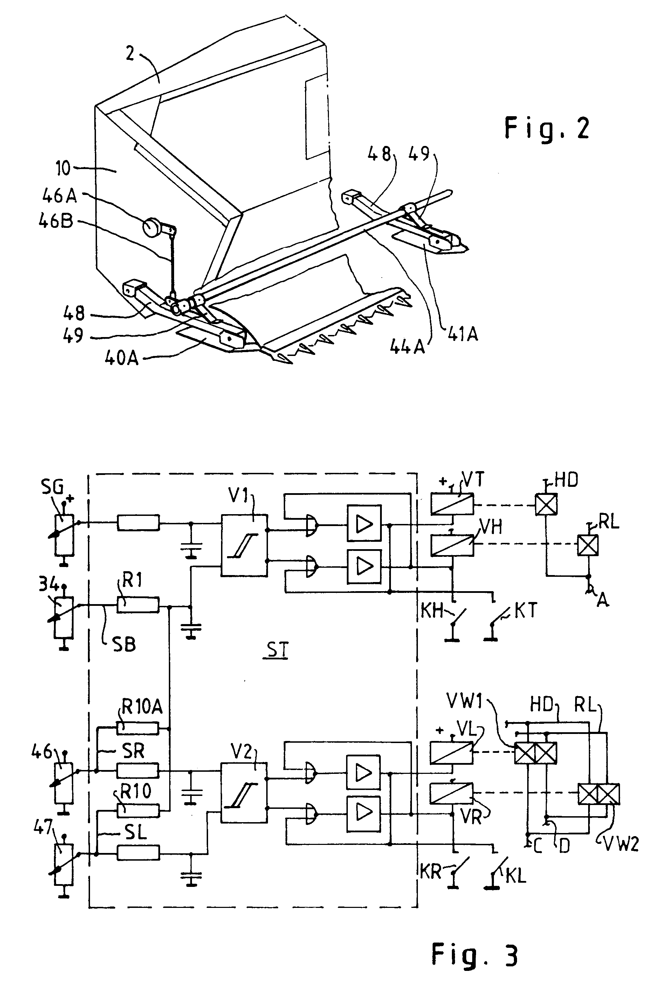

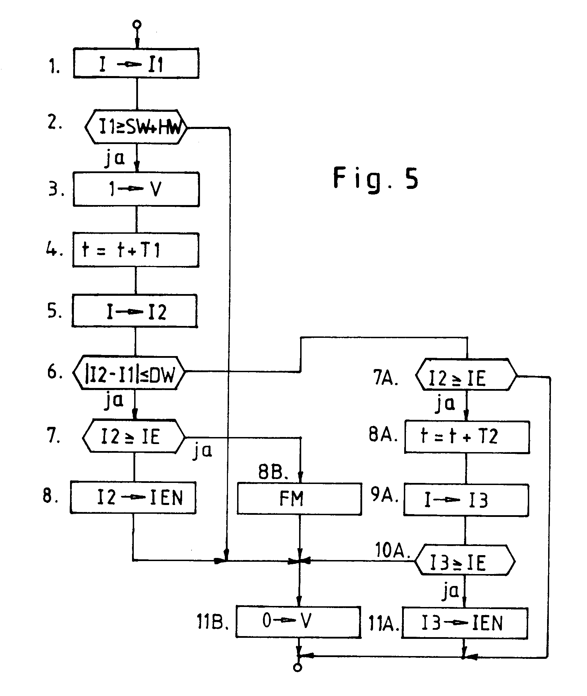

Fig. 2 zeigt ein Detail einer andersartigen Bodenabtaster-Ausführung am Träger eines flexiblen Messerbalkens (2). Dabei sind Abtastkufen (40A, 41A) an Führungsarmen (48) schwenkbar gelagert, deren Schwenkstellung durch Tastarme (49) auf die Verbindungswelle (44A) übertragen wird, deren Drehwinkel über ein Übertragungsgestänge (46B) auf das Potentiometer (46A) übertragen wird.

Fig. 3 zeigt eine schematische Reglerschaltung (ST). Die Abtast- und Bodendruckpotentiometer (46, 47, 34) sowie elektromechanische Hydraulikventile (VL, VR; VT, VH) für die Hydraulikzylinder der Schwenker (20, 21) und für das Senken und Heben mit den Hydraulikzylindern zur Schneidhöhen-Einstellung sind mit einer elektronischen Steuervorrichtung (ST) verbunden. Außerdem führt von einem Bedienpult ein Schnitthöhengeber (SG) in die Steuervorrichtung (ST), und am Bedienpult sind Steuerkontakte (KT, KH; KL, KR) angeordnete, die den Stellausgängen der Steueuervorrichtung parallel geschaltet sind. Diese ermöglichen eine Übersteuerung der Regelvorrichtung von Hand z. B. zur Überwindung von Hindernissen im Fahrweg oder beim Wenden und einen reinen Handbetrieb z.B. bei fehlender oder defekter Regelvorrichtung.

Die Steuervorrichtung (ST) ist in der Analogtechnik ausgeführt. Sie enthält hysteresebehaftete Vergleicher (V1, V2), deren Ausgänge die Ventile (VT, VH; VL, VR) über Verstärker beaufschlagen. Der erste Vergleicher (V1) ist mit einem Eingang an den Bodendrucksollwertgeber (SG) angeschlossen, und an seinem zweiten Eingang ist ein Ist-Signal das über ein addierendes Widerstandsnetzwerk zugeführt, das aus einem ersten Widerstand (R1) und zwei gleich großen etwa zehnmal hochohmigeren Widerständen (R10, R10A) besteht, von denen der erste Widerstand mit dem Bodendrucksignal (SB), das von dem Bodendruckpotentiometer (34) abgegeben wird, verbunden ist und deren anderen Widerstände (R10, R10A) mit den Bodenabstandssignalen (SR, SL) der Bodenabtaster (46, 47) verbunden sind. Auf diese Weise erfolgt das Heben bzw. Senken im wesentlichen abhängig vom Bodendruck auf die Wanne des Mähtisches und zu einem gewissen Bruchteil von etwa 20% durch das Summensignal der Höhen-Abtaster, das die mittlere Schnitthöhe angibt. Hierbei wird davon ausgegangen, daß die Netzwerkwiderstände (R1, R10, R10A) groß gegenüber den Potentiometerwiderständen sind. Die Ventile (VH, VT) verbinden den Zylinderanschluß (A) mit der Öl-Druck- bzw. Rücklaufleitung (HD, RL).

Die Bodenabstandssignale (SR, SL) werden in dem zweiten Vergleicher (V2) differentiell ausgewertet, mit dessen Ausgangssignalen das Links- bzw. Rechtsschwenken über Vierwegeventile (VW1, VW2) gesteuert wird. Diese Ventile verbinden jeweils die Öl-Druckleitung (HD) und die Rücklaufleitung (RL) mit einem der beiden Anschlüssen (C, D) der beiden Schwenker (20, 21) - Fig.1 - wechselseitig. Die Schwenker (20, 21) sind jeweils einseitig miteinander mit einer Öl-Kommunikationsleitung (HK) verkoppelt, so daß jeweils das Heben auf der einen Seite ein Senken auf der anderen zur Folge hat und umgekehrt, so daß ein Schwenken unter Beibehaltung der Mittellage und eines günstigen Querschnitts des Förderschachtes (50), Fig. 1, erfolgt.

Die Vergleichereingänge sind mit Integrationsgliedern zur Störunterdrückung versehen, und die Vergleicher-Ausgänge führen über wechselseitige Sperrglieder, die Fehlerzustände einer gleichzeitigen Einschaltung ausschließen, auch wenn eine übersteuernde Betätigung der Steuerkontakte (KT, KH; KL, KR) erfolgt.

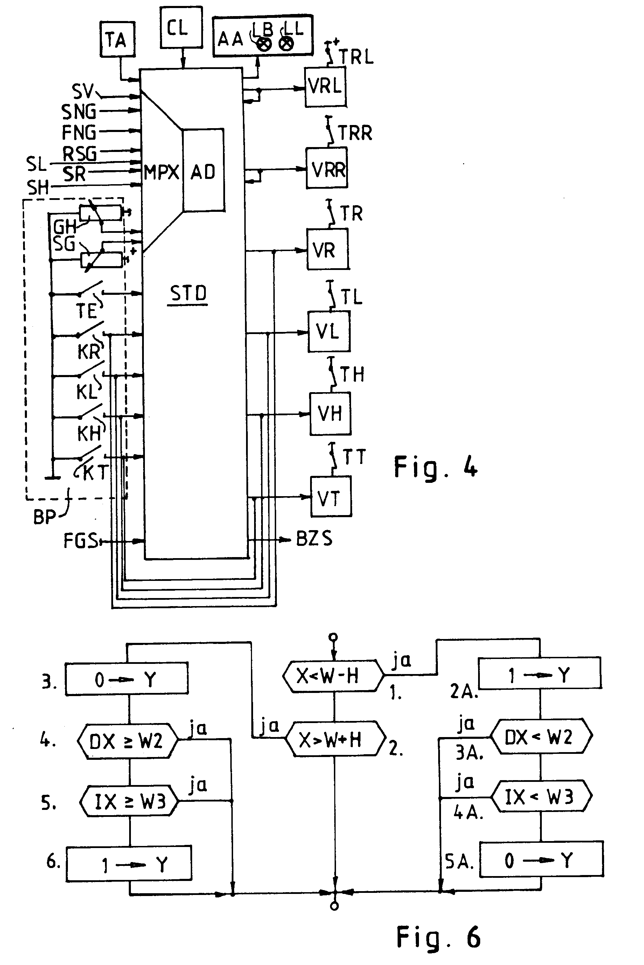

Fig. 4 zeigt ein Blockschaltbild einer digitalen Steuervorrichtung (STD), die zu der analogen Steuervorrichtung (ST) in Fig. 3 kompatibel ist, jedoch zusätzliche Funktionen enthält. Die Kontakte (KT, TH, KR, KL), die Ventile (VT, VH, VL, VR) und die Signalgeber (SG, SB, SL, SR) sind gleich. Sämtliche Bedienelemente sind auf einem Bedienpult angeordnet. Ergänzend sind thermische Schutzschalter (TT, TH, TL, ZR, TRR, TRL) gezeigt, über die Spannungsversorgung der Ventile jeweils geführt ist. Auch sind die Elemente gezeigt, die zur Rüttelsiebregelung vorgesehen sind. Dazu ist der Fahrwerkneigungsgeber (FNG) und der Stellungsgeber der Rüttelsiebbetätigung, nämlich der Rüttelsiebgeber (RSG) vorgesehen. Um eine kontrollierbare Schwenkung des Mähtisches auch ohne Bodenabtastung vornehmen zu können, ist außerdem ein Schneidwerkneigungsgeber (SNG) an einem der Schwenker (21), Fig. 1, angeordnet. Weiterhin ist das Höhenpotentiometer (33), das ein Höhenlagesignal (SH) der Höhenschwenkung des Schneidwerkes um seine Schwenkachse am Fahrwerk abgibt, auf den Eingang geführt. Ergänzend ist ggf. ein weiteres Höhensignal (SV) von einem weiteren Potentiometer der Steuervorrichtung (STD) zugeführt, das über eine über das gesamte Mähwerk geführte Steuerwelle jeweils die Stellung des höchsten aller Bodenabtaster (40 - 43) durch Mitnehmer überträgt. Außerdem ist ein Taster (TE) an der Bedienvorrichtung vorgesehen, der eine Betriebszustandsumschaltung ermöglicht, durch die jeweils entweder die Übernahme des Ist-Signales des Bodendruckes (SB) vom Bodendruckpotentiometer (34) oder die Übernahme des Höhenlagesignales (SH) vom Höhenpotentiometer (33), ggf. in Verbindung mit dem Höhensignal (SV), bestimmt wird. Dabei wird dem Bediener auf den Betriebsanzeigelampen (LB, LL), die Bodendruck- oder Höhenlagenregelung signalisiert. Die Gebersignale sind über einen steuerbaren Multiplexer (MPX) auf einen Analog-Digitalwandler (AD) geführt, dessen Digitalsignale programmgesteuert verarbeitet werden. Der Programmablauf wird durch eine Uhr (CL) zeitabhängig gesteuert. Die Vorgabewerte werden durch eine Tastatur (TA) eingegeben. Die normierten Ist-Werte, z.B. der Bodendruck oder die Schneidwerkhöhenlage, werden auf einer Anzeigevorrichtung (AA) dargestellt.

Das Programm enthält verschiedene Teilprogramme, die verschiedene Sonderfunktionen erfüllen. Das Regelungs-Teilprogramm löst die entsprechende Funktion, die der Analogregler erfüllt indem die Signale fortlaufend über den Multiplexer (MPX) nacheinander ausgewählt, digitalisiert und gespeichert werden. Danach erfolgt die additive Zusammenfassung des Bodendrucksignalwertes (SB) mit den Bruchteilen des linken und des rechten Abtastersignalwertes (SL, SR) und der Vergleich mit dem Sollwert (SG) unter Berücksichtigung einer Hystereseschwelle. Je nachdem, ob diese über- bzw. unterschritten ist, erfolgt dann eine Ausgabe des Heben- bzw. Senken-Ventilstellsignales.

Weiterhin erfolgt ein Vergleich der Abtastsignale unter Berücksichtigung eines Schwellwertes (SL, SR), worauf entsprechend bei einer Über- oder Unterschreitung das rechts- bzw. linksschwenkende Steuersignal ausgegeben wird.

Weiterhin wird der Fahrwerkneigungswert (FNS) mit dem Rüttelsiebsignalwert (RSG) unter Berücksichtigung einer vorgegebenen Hystereseschwelle verglichen und davon abhängig bei Über- oder Unterschreitung das links- oder rechtsverstellende Rüttelsiebventil (VRL, VRR) betätigt.

Darüberhinaus wird ein Überwachungsprogramm der Digitaleinganssignale zyklisch durchgeführt, mit dem jeweils im unbestromten Zustand der Ventile (VT, VH, VL, VR) eine Betätigung eines Steuerkontaktes (KT,

EP 0 331 893 B1

KH, KL, KR) und im bestromten Zustand der Ventile deren Spannungsversorgung über die thermischen Schutzkontakte (TT, TH, TL, TR, TRR. TRL) durch Messung der Restspannung an den Ausgangs-Schaltverstärkern ermittel wird. Die Messung der Restspannung an den Ausgangsverstärkern und deren Überwachung bezüglich eines oberen und eines unteren Grenzwertes bietet weiterhin einen Überlastungsschutz für die Schaltverstärker an den Ausgängen, falls ausgangsseitig ein Kurzschluß vorhanden sein sollte, indem bei zu hoher Verlustspannung bezogen auf den oberen Grenzwert eine sofortige Abschaltung erfolgt. Der stromlose bzw. bestromte Zustand wird jeweils während der Signalauswertung kurzzeitig d.h. mit etwa 1% der Zykluszeit und entsprechend kurz gegenüber der Ventilschaltzeit, hergestellt, so daß der Betriebszustand dadurch nicht beeinflußt wird. Wird eine Betätigung eines der Steuerkontake (KT, KH, KR, KL) festgestellt, so wird das jeweils komplementäre Ventil, das eine umgekehrte Verschwenkung steuern würde, als es der Steuerkontakt tut, nicht eingeschaltet oder abgeschaltet. Die Betätigung der Steuerkontakte die primär einer Übersteuerung der Regelvorrichtung dienen, was zum Überwinden von Hindernissen oder bei Wendevorgängen erforderlich ist, wird in einer weiteren Programmausgestaltung derart ausgewertet, daß die Zeitfolge der Betätigung analysiert wird, deren Analyseergebnis eine Steuerfunktion auslöst. So kann z.B. eine kurze Folge zweier kurzer Betätigungen derart genutzt werden, daß sie das Halten eines Sollwertes bewirkt, der jeweils auf erneute kurze Tastenbedienungen hin jeweils abwechselnd dem Regler vorgegeben oder wieder zurückgenommen wird. Somit läßt sich eine starke Bedienungsvereinfachung erreichen, und Analogwertgeber sind entbehrlich. Auch der Sollwertgeber (SG) läßt sich auf diese Weise ersetzen und erübrigen.

Eine vorteilhafte Programmausgestaltung besteht darin, daß der thermische Belastung der Ventile durch fortlaufende Akkumulation der jeweiligen Einschaltzeiten unter jeweiliger Reduktion um einen den akkumulierten wert entsprechenden Bruchteil, der die laufende Abkühlung repräsentiert, nachgebildet wird. Abhängig von dem so gebildeten Belastungswert erfolgt bei einer festgestellten Überschreitung eines vorgegebenen Belastungsgrenzwertes eine Abschaltung des zugehörigen Ventiles. Vorzugsweise wird jedoch einer Erreichung des Grenzwertes vorgebeugt. indem die Betätigungshäufigkeit des Ventiles dadurch herabgesetzt wird, daß die zugehörigen Hystereseschwelle vergrößert oder eine um so größere Schalttotzeit vorgegeben wird, je höher der ermittelte Belastungswert ist. Dies wirkt auch einer Entstehung von Regelschwingungen entgegen. Auch andere Belastungsgrößen, z.B. die Hydrauliktemperatur, läßt sich messen oder errechnen und als die Hysteresewerte oder Totzeit bestimmenden Funktionsgrößen verwenden.

Durch eine Autokorrelationsanalyse der Ein- und Ausschaltzeiten der Stellsignale über mehrere Schaltvorgänge werden unerwünschte Schwingungen erkannt, und es wird ein Zahlenwert erzeugt, dessen Größe einer etwa auftretenden Periodizität entspricht, und dieser Zahlenwert wird für eine Hystereseänderung und-/oder eine Totzeitänderung genutzt, die der Schwingungsausbildung entgegengewirkt.

Eine weitere vorteilhafte Programmausgestaltung besteht darin, daß die Arbeitsbereiche der Signalgeber (SR, SL, SD, SNG, FNG, RSG) laufend überwacht werden, so daß eine automatische Adaption der Ist-Werte an den jeweiligen Arbeitsbereich erfolgt, wodurch eine externe Nullpunktjustage erübrigt wird und eine ständige Funktionskontrolle gegeben ist, was insbes. bei den Bodenabtastern wegen der Gefahr eines Verbiegens oder Brechens der Fühler von Bedeutung ist.

Fig. 5 zeigt ein Flußdiagramm eines solchen Überwachungsprogrammteiles, das für die einzelnen Signale jeweils durchlaufen wird, wozu Ist-Wert und Endwertspeicher bereitgestellt sind. Im ersten Schritt erfolgt die Übernahme eines ersten Meßwertes (I1), im Vergleichsschritt, dem 2. Programmschritt, wird der Meßwert mit dem Sollwert (SW) zuzüglich des Hysteresewertes (HW) verglichen. Liegt keine Überschreitung vor, so wird das zugehörige Ventil im weiteren Schritt ausgeschaltet: andernfalls wird es im 3. Schritt eingeschaltet. Danach wird im 4. Schritt ein Zeitprogramm einer Totzeit (T1) der Stellmittel durchlaufen, welche für die Verstellung um einen Differenzwert (DW) ausreicht. Es erfolgt dann im 5. Schritt eine weitere Messung eines zweiten Meßwertes (I2), dessen Differenz zu dem ersten Meßwert (I1) betragsmäßig mit dem Differenzwert DW verglichen wird. War die Verstellung nicht erwartungsgemäß, wurde eine Veränderung über die Schwelle nicht erreicht, so wird der zweite Meßwert im 7. Schritt mit dem gespeicherten Endwert (IE) verglichen. Ist dieser nicht erreicht, so wird im 8. Schritt der neue niedrigere zweite Meßwert (I2) als neuer Endwert (IEN) gespeichert: ist er jedoch erreicht worden, so wird dieser Fall einer Regelung an die Bereichsgrenze zu einer Anzeige und zu einer statistischen Auswertung ausgegeben bzw. gespeichert.

In beiden Fällen erfolgt eine Ventilabschaltung, und das Programm wird dann verlassen. Sofern im 6. Schritt der Differenzwert (DW) überschritten oder erreicht wurde, wird anschließend ebenfalls der zweite Meßwert (I2) mit dem Endwert (IE) verglichen und, wenn dieser nicht erreicht ist, der Programmteil verlassen; andernfalls wird in einem 8. Schritt ein zweites Totzeitprogramm (T2) durchlaufen nach dem im 9. Schritt ein dritter Meßwert (I3) gemessen wird, der im 10. Schritt mit dem Endwert (IE) verglichen wird. Ist dieser noch gegeben, so wird das Ventil abgeschaltet und das Programm verlassen, ist er jedoch überschritten, so wird der neue, höhere Wert als neuer Endwert (IEN) gespeichert.

Für die Regelung in der anderen Richtung wird ein entsprechendes Programm mit dem anderen Endwert

5

durchlaufen. Die Auswertung der einzelnen Meßwerte erfolgt jeweils in dem Bereich zwischen dem jeweiligen unteren und oberen Endwert, so daß die Meßpotentiometer in einem Mittelbereich zu betreiben sind, ohne daß die jeweilige Lage des Meßbereichs sich auf die Regelung auswirkt.

Auch lassen sich anstelle der Potentiometermeßwertgeber andere, die z.B. mit Ultraschall arbeiten, verwenden, auch wenn deren Signalpegel von den üblichen Potentiometersignalpegeln abweicht, da die mitlaufende Endwertauswertung eine automatische Meßbereichsadaption jeweils erbringt.

Eine weitere vorteilhafte Programmgestaltung liegt darin, daß das Signal des Fahrwerkneigungsgebers (FNG) zur Regelung der Verschwenkung des Mähtisches verwandt wird. Dies ist dann von Vorteil, wenn eine relativ hohe Schnitthöhe gewählt wird und Bodenabtaster nicht einsetzbar sind. Es ist bei lockerem Boden davon auszugehen, daß eine Fahrwerkneigung durch ein einseitiges Einsinken oder Fahren in einer Längsfurche oder Spurrinne hervorgerufen wird. Somit ist eine Gegenschwenkung des Mähtisches hilfreich. Aus diesem Grunde wird aus der Fahrwerkneigung ein Sollwert für den Schwenkregler abgeleitet, dem als Ist-Wert das Schnittwerkneigungssignal (SNG) eines Gebers zugeführt wird, der beispielsweise die Einstellung eines Schwenkers (21) signalisiert.

Eine weitere Möglichkeit zur Vereinfachung der mechanischen Bodenabtastung ist dadurch gegeben, daß statt einer Verbindungswelle zweier paralleler Abtastkufen, die jeweils das höchste der beiden Niveaus durch ihre Verdrehung auf ein Potentiometer gibt, an jeder Kufe je ein Potentiometer angeordnet wird und deren Signale vorzugsweise nach der Digitalwandlung verglichen werden und dann jeweils das höhere Signal zur Ist-Wertbildung genutzt wird.

Eine vorteilhafte Programmgestaltung, gemäß Fig. 6, erbringt eine Dreipunktregelung mit Proportional-Integral-Differential-Charakteristik und dynamischer Anpassung der Regelparameter. Dabei wird in einem 1. Vergleicherschritt des Ist-Wertes (X) mit dem Sollwert (W) unter Berücksichtigung einer Hysterese (H) festgestellt. ob der Sollwert unterschritten wird. In dem Fall wird das entsprechend entgegenwirkende Stellglied (Y) im 2. Schritt aktiviert.

In einem 3. Schritt wird die zeitliche Änderung (DX) des Ist-Wertes (X) mit einem zweiten Vergleichswert (W2) verglichen. Ist die Änderung geringer, wird das Teilprogramm beendet; andernfalls wird in einem 4. Schritt ein Integralwert (IX) des Ist-Wertes (X), der als Summenwert der Änderungen (DX) über einen vorgegebenen Integrationszeitraum laufend gebildet wird, mit einem dritten Vergleic hswert (W3) verglichen, bei dessen Überschreitung in einem 5. Schritt das Stellglied (Y) deaktiviert wird. Wurde in dem 1. Vergleichsschritt vom Ist-Wert (X) der Sollwert (W) mit der Hysterese (H) überschritten, so wird in einem 2. Vergleichsschritt geprüft, ob der Sollwert (W) selbst überschritten wird und, wenn das der Fall ist, wird das Stellglied (Y) im 3. Schritt deaktiviert. In einem 4. Schritt erfolgt dann die Prüfung der Änderung (DX) auf ein Unterschreiten des zweiten Vergleichswertes (W2) und, wenn das der Fall ist, erfolgt in einem 5. Schritt ein Vergleich des Integralwertes (IX) mit dem dritten Vergleichswert (W3) bei dessen Unterschreitung das Stellglied (Y) aktiviert wird, wonach der Programmdurchlauf beendet ist. Auch in allen nicht weiterverfolgten alternativen Vergleichsausgängen wird der Programmzyklus beendet.

Eine andere, einfache Möglichkeit der dynamischen Anpassung besteht darin, die Hysterese proportional zur Istwert-Geschwindigkeit zu ändern.

Die Adaption des Regelverhaltens läßt sich sehr günstig durch Änderung der Integrationszeit vornehmen. Hierzu können die im anderen Programmteil ermittelten Belastungswerte und auch ein Fahrgeschwindigkeitssignal (FGS) - s. Fig. 4 - benutzt werden, das von der Fahrzeugsteuerelektronik oder einem geeigneten Geber der Steuervorrichtung (STD) zugeführt wird.

Die Häufigkeit der Umschaltung der Stellglieder wird vorteilhaft in einem Speicher zyklisch akkumuliert woraus ein Betriebszustandssignal (BZS) abgeleitet an die Fahrwerkssteuerung und/oder den Bediener abgegeben wird.

Die verschiedenen dargestellten Programmteile werden durch ein Leitprogramm in bekannter Weise zyklisch aktiviert und, mit den Parametern, wie Vergleichswerten, Grenzwerten usw. der verschiedenen Regler, Geber usw. jeweils versorgt, durchgeführt. Die Überschreitung von Grenzwerten oder längeres Verbleiben in Grenzwertbereichen und das Auftreten unzulässiger Betriebszustände sowie die Betriebsdauern und Schaltungshäufigkeiten der einer Abnutzung unterliegenden Bauteile, wie Ventile usw., werden zweckmäßig statistisch erfaßt und sind im Wartungsfall auslesbar.

## Patentansprüche

1. Regelvorrichtung an einer selbstfahrenden Erntemaschine (1) mit einem Mähtisch (2), der höhenveränderlich und quer zur Fahrtrichtung hydraulisch gesteuert verschwenkbar ist und seitlich Bodenabtaster (40 - 47) aufweist, deren Bodenabstandssignale (SR, SL) einer Steuervorrichtung (ST) zur Regelung einer Verschwenkung quer zur Fahrtrichtung zugeführt werden,
dadurch gekennzeichnet, daß die Differenz der Bodenabstandssignale (SR, SL) zu der Regelung der Verschwenkung genutzt wird und der Mittelwert der Bodenabstandssignale (SR, SL) als Ist-Wert-Anteil zu einer Regelung einer Schnitthöhe des Mähtisches (2) dient.

2. Regelvorrichtung nach Anspruch 1, dadurch gekennzeichnet, daß an dem Mähtisch (2) oder an einer Schnitthöhenhydraulikleitung (A) ein Bodendrucksignalgeber (34) angeordnet ist, dessen Bodendrucksignal (SB) in Verbindung mit dem Mittelwert der Bodenabstandssignale (SR, SL) als Ist-Wert zur Regelung der Schnitthöhe dient.

3. Regelvorrichtung nach Anspruch 2, dadurch gekennzeichnet, daß das Bodendrucksignal (SB) zu etwa 80% und der Mittelwert zu etwa 20% den Ist-Wert bilden.

4. Regelvorrichtung nach einem der vorstehenden Ansprüche, dadurch gekennzeichnet, daß ein Fahrwerkneigungsgebersignal (FNG) sowohl einer Rüttelsiebregelung zugeführt wird als auch als Ist-Wert-Komponente der Regelung der Verschwenkung zugeführt wird, so daß eine entgegengerichtete Schwenkung erfolgt.

5. Regelvorrichtung nach einem der vorstehenden Ansprüche, dadurch gekennzeichnet, daß die Steuervorrichtung (ST) aus hysteresebehafteten Vergleichern (V1, V2) besteht, deren Ausgänge elektromechanische Hydraulikventile (VT, VH; VL, VR) beaufschlagen, die die Schnitthöhen-Hydraulikzylinder (30, 31) und hydraulische Schwenker (20, 21) zur Links- bzw. Rechtsschwenkung steuern.

6. Regelvorrichtung nach Anspruch 5, dadurch gekennzeichnet, daß die Ausgänge der Vergleicher (V1, V2) gegen gleichzeitige Aktivierung verriegelt sind.

7. Regelvorrichtung nach Anspruch 5 oder 6, dadurch gekennzeichnet, daß parallel zu den Vergleicherausgängen handbetätigbare Steuerkontakte (KT KH: KL, KR) geschaltet sind.

8. Regelvorrichtung nach Anspruch 1, dadurch gekennzeichnet, daß die Bodenabtaster (40 - 47) aus in Fahrtrichtung parallelen Ultraschallsonden oder elastischen Abtastbügeln (40, 41; 42, 43) bestehen, deren Abstand größer als eine Reifenoder Furchenbreite ist und die durch eine Maximalsignalschaltung oder eine Verbundwelle (44, 45) paarweise verbunden sind, deren Drehwinkel auf Abtastpotentiometer (46, 47) übertragen wird.

9. Regelvorrichtung nach Anspruch 1, dadurch gekennzeichnet, daß die Bodenabtaster (40A - 49) am Träger eines flexiblen Messerbalkens (2) aus parallelen, an Schwenkarmen (48) befestigten, Gleitschuhen (40A, 41A) besteht, deren Schwenklage jeweils über Hebelarme (49) auf die Verbundwelle (44A) übertragen wird, deren Drehwinkel auf das Abtastpotentiometer (46A) übertragen wird, und daß die Schwenklagen sämtlicher Gleitschuhe (40A, 41A) auf eine weitere Verbundwelle bezüglich der jeweils höchsten Lage eines der Gleitschuhe (40A, 41A) übertragen werden und die jeweilige Verbundwellenverdrehung auf ein Höhenpotentiometer übertragen wird.

10. Regelvorrichtung nach Anspruch 1, dadurch gekennzeichnet, daß die Abtastbügel (40, 41) oder Gleitschuhe (40A, 41A) jeweils mit einem Abtastpotentiometer verbunden sind, deren Abtastsignale jeweils paarweise zugeordnet bezüglich des jeweiligen Maximalwertes als Ist-Werte ausgewertet werden.

11. Regelvorrichtung nach Anspruch 2, dadurch gekennzeichnet, daß der Bodendruckmelder (34) den jeweiligen Abstand zwischen dem Hydraulikzylinder (31) und einem Widerlager meldet, an dem der Hydraulikzylinder (31) über eine Druckfeder (35) abgestützt ist.

12. Regelvorrichtung nach einem der vorstehenden Ansprüche dadurch gekennzeichnet daß die Steuervorrichtung (STD) ein programmgesteuerter Prozessor ist, dem die Gebersignale (SB, SR, SL, FNG, SV, SH) über einen steuerbaren Multiplexer (MPX) mit einem nachgeschalteten Analog- Digitalwandler (AD) zugeführt werden und dem eingangsseitig Taktsignale einer Uhr (CL), die Signale der Steuerkontakte (KR, KL, KH, KT), Eingabekontakte (TE, TA) und ein Fahrgeschwindigkeitssignal (FGS) zugeführt werden und der ausgangsseitig die Ventile (VR, VL, VH, VT) ansteuert.

13. Regelvorrichtung nach Anspruch 12, dadurch gekennzeichnet, daß ein erstes Teilprogramm die Eingangssignale zyklisch abfragt, auswertet und speichert, ein zweites Teilprogramm die Ist- und Sollwerte unter Berücksichtigung eines jeweils vorgegebenen Hysteresewertes vergleicht und vergleichsabhängig die Ventilsteuerausgänge aktiviert.

14. Regelvorrichtung nach Anspruch 13, dadurch gekennzeichnet, daß bei der zyklischen Abfrage der Steuerkontakte (KR, KL, KH, KT) jeweils der zugehörige Ausgang zumindest kurzzeitig verglichen zur Ventilreaktionszeit deaktiviert wird.

15. Regelvorrichtung nach Anspruch 14, dadurch gekennzeichnet daß eine Tastimpulsfolge der Steuerkontakte (KH, KT) nach Schließ- und Öffnungszeiten ausgewertet wird und jeweils bei Auftreten einer ersten vorgegebenen Impulsfolge eine Speicherung des jeweils gemessenen zugehörigen Ist-Wertes als Sollwert vorgenommen wird, der jeweils abhängig vom Auftreten einer anderen verabredeten Impulsfolge zur anschließenden Regelung jeweils abwechselnd vorgegeben oder nicht weiter vorgegeben wird.

16. Regelvorrichtung nach Anspruch 13, dadurch gekennzeichnet, daß abhängig von der Betätigung einer der Eingabekontakte (TE) ein erster oder zweiter Betriebszustand vorgegeben wird, wobei in dem ersten das Bodendrucksignal (SB) und in dem zweiten ein Höhenlagesignal (SH) des Mähtisches (2) und ggf. ein Höhensignal (SV) der Bodenabtaster (40 - 43) einer Ist-Wertbildung sowie das Bodendrucksollwertsignal (SG) bzw. ein Höhensollwert (SH) für die Schnitthöhenregelung zugeführt wird und wobei der jeweilige Betriebszustand jeweils auf einer Anzeigelampe (LB, LL) ausgegeben wird.

17. Regelvorrichtung nach Anspruch 13, dadurch gekennzeichnet, daß die Eingangssignale, zugeordnet zu den jeweils zumindest kurzzeitig gegenüber einer Ventilreaktionszeit durchgeschalteten Ausgängen, erstens bezüglich eines unteren Schwellwertes ausgewertet werden, so daß eine fehlende Ventilfunktion und -spannungsversorgung bei einer Schwellwertunterschreitung festgestellt, gespeichert und gemeldet wird und zweitens bezüglich eines oberen Schwellwertes ausgewertet werden, so daß eine Überlastung der Ausgangsschalter bei einer Schwellwertüberschreitung festgestellt wird, was zur Abschaltung des Ausgangssignales und einer Fehlermeldung genutzt wird.

18. Regelvorrichtung nach Anspruch 13, dadurch gekennzeichnet, daß die thermischen Ventilbelastungen durch jeweilige Akkumulation der vorliegenden Ventil-Einschaltdauern unter jeweiliger Reduktion des Akkumulationswertes um einen der akkumulierten Belastung proportionalen Anteil laufend ermittelt werden und bei Überschreiten eines vorgegebenen Belastungsgrenzwertes eine Abschaltung und Signalgebung erfolgt.

19. Regelvorrichtung nach Anspruch 18, dadurch gekennzeichnet, daß abhängig von der jeweiligen ermittelten Ventilbelastung und/oder von dem Fahrgeschwindigkeitssignal (FGS) die vorgegebenen Hysteresewerte und/oder die Regeltotzeiten, nach denen jeweils eine erneute Ventileinschaltung erfolgt, vorgegeben werden.

20. Regelvorrichtung nach einem der Ansprüche 12 bis 19, dadurch gekennzeichnet, daß die Ein- und Ausschaltzeiten der einzelnen Reglerausgänge über vorgegebene Zeitabschnitte durch Autokorrelation verglichen werden und abhängig von Maß der Periodizität die zugehörigen Hysteresewerte und/oder die zugehörigen Regeltotzeiten verändert werden.

21. Regelvorrichtung nach einem der Ansprüche 12 bis 20, dadurch gekennzeichnet, daß die Regelungen mit einer Proportional-Integral-Differential-Charakteristik erfolgen indem in einem zyklisch durchlaufenen Teilprogramm der jeweilige Ist-Wert (X) mit dem Sollwert (W) verglichen wird und jeweils die zeitliche Änderung (DX) des Ist-Wertes mit einem zweiten Vergleichswert (W2) und ein zeitlicher Integralwert (IX), der über eine jeweils vorgegebene Integrationszeit durch Summierung der jeweiligen Änderungen (DX) laufend gebildet wird, mit einem dritten Vergleichswert (W3) jeweils verglichen wird, worauf bei Unterschreitung des Sollwertes (W) der Reglerausgang aktiviert wird, jedoch bei gleichzeitiger Überschreitung der beiden Vergleichswerte (W2, W3) jeweils der Regelausgang deaktiviert wird und ferner bei Überschreitung des Schwellwertes (W) der Reglerausgang deaktiviert wird, jedoch bei gleichzeitiger Unterschreitung der beiden Vergleichswerte (W2, W3) der Reglerausgang aktiviert wird.

22. Regelvorrichtung nach einem der Ansprüche 12 bis 21, dadurch gekennzeichnet, daß jeweils nach Aktivierung eines Ausgabesignales das zugehörige Gebersignal (SB, SR, SL) nach Ablauf einer ersten Wartezeit (T1) die länger als eine Reglerreaktionszeit ist. gemessen und mit dem vorherigen Gebersignal (I1) bezüglich eines Toleranzwertes (DW) verglichen wird und dann, wenn eine derartige Änderung stattgefunden hat, ein Vergleich mit einem gespeicherten Endwert (IE) erfolgt und, falls der Endwert (IE) erreicht war, nach einer weiteren Wartezeit (T2) eine erneute Messung eines Ist-Wertes (I3) erfolgt mit dem ein erneuter Vergleich mit dem Endwert (IE) erfolgt und, falls dieser Ist-Wert (I3) davon abweicht, dieser Wert als der später zu verwendende Endwert (IEN) gespeichert wird, und daß ferner, wenn der Vergleich nach der ersten Wartezeit (T1) keine Änderung ergeben hat, ein Vergleich des gemessenen Ist-Wertes (I2) mit dem gespeicherten Endwert (IE) erfolgt und, wenn dieser Verschiedenheit ergibt, der Wert als der neue Endwert (IEN) gespeichert wird und wobei immer dann, wenn der Sollwert erreicht ist oder wenn der Endwert (IE) erreicht war, vor Verlassen des Programmteiles der zugehörige Reglerausgang deaktiviert wird.

23. Regelvorrichtung nach einem der Ansprüche 12 bis 22, dadurch gekennzeichnet, daß die jeweils gemessenen Geberwerte (SB, SL, SR) mit oberen und unteren vorgegebenen Grenzwerten verglichen werden, bei deren Über- bzw. Unterschreitung die weitere Auswertung des betreffenden Geberwertes unterbleibt und eine Ersatzgröße dafür vorgegeben wird, und andernfalls die Geberwerte (SB, SL, SR) bezüglich der jeweils gespeicherten oberen und unteren Endwerte (IE) nach Nullpunktlage und Bereichsgröße normalisert und linearisiert der Regelung zugeführt werden.

24. Regelvorrichtung nach einem der Ansprüche 12 bis 23, dadurch gekennzeichnet, daß alle Grenzwertüberschreitungen und Endwertbetriebszustände statistisch erfaßt werden und Schalthäufigkeiten und Einschaltzeiten akkumuliert erfaßt und gespeichert werden, so daß sie durch ein Ausgabeprogrammteil vom Bediener auf eine Anzeigevorrichtung (AA) abrufbar sind, und daß die normierten Bodendruckwerte und-/oder Höhenlagewerte dem Bediener laufend auf der Anzeigevorrichtung (AA) dargestellt werden.

## Claims

1. Regulating system on a self-propelling harvesting machine (1) , with a height-adjustable cutter apron (2) which can be hydraulically controlled to swivel at right angles to the direction of travel and at the sides incorporates ground sensors (40 - 47) from which ground clearance signals (SR, SL) are sent to a control device (ST) for regulation of a swivel movement at right angles to the direction of travel, characterised by using the difference between the ground clearance signals (SR, SL) for regulation of the swivel motion and using the mean value of the ground clearance signals (SR, SL) as an actual value component to regulate a cutting height of the cutter apron (2).

2. Regulating system according to claim 1, characterised in that disposed on the cutter apron (2) or on a cutting height hydraulic line (A) is a ground pressure signal generator (34), the ground pressure signal (SB) from which is used in conjunction with the mean value of the ground clearance signals (SR, SL) as an actual value for regulating the cutting height.

3. Regulating system according to claim 2, characterised in that the actual value is constituted approximately 80% by the ground pressure signal (SB) and approximately 20%, by the mean value.

4. Regulating system according to one of the preceding claims, characterised in that a vehicle tilt generator signal (FNG) is supplied both for shaking screen regulation and as actual value component for regulation of the swivel movement, thereby producing a swivel movement in the other direction.

5. Regulating system according to one of the preceding claims, characterised in that the control device (ST) consists of comparators (V1, V2) adjusted for hysteresis, the outputs of which actuate electromechanical hydraulic valves (VT, VH; VL, VR) which control the cutting height hydraulic cylinders (30, 31) and hydraulic swivellers (20, 21) for swivelling to the left or right.

6. Regulating system according to claim 5, characterised in that the outputs of the comparators (V1, V2) are locked against simultaneous activation.

7. Regulating system according to claim 5 or 6, characterised in that control contacts (KT, KH; KL, KR) which can be manually operated are connected parallel to the comparator outputs.

8. Regulating system according to claim 1, characterised in that the ground sensors (40 - 47) consist of ultrasonic probes or elastic scanning stirrups (40, 41; 42, 43) parallel in the direction of travel, the spacing between which is greater than the width of a tyre or furrow and which are connected in pairs by a maximum signal circuit or a composite shaft (44, 45) whose twist angle is transmitted to scanning potentiometers (46, 47).

9. Regulating system according to claim 1, characterised in that the ground sensors (40A - 49) consist of shoes (40A, 41A) attached on swivel arms (48) to the carrier of a flexible cutter bar (2), the swivel position of each of said shoes being transmitted via lever arms (49) to the composite shaft (44A), the twist angle of which is transmitted to the scanning potentiometer (46A) , and in that the swivel positions of all the shoes (40A, 41A) are transmitted to another composite shaft in respect of the particular highest position of one of shoes (40A, 41A) and the respective twisting of the composite shaft is transmitted to a height potentiometer.

10. Regulating system according to claim 1, characterised in that the sensing stirrups (40, 41) or shoes (40A, 41A) are respectively connected to a scanning potentiometer from which the scanning signals are respectively evaluated in pairs in respect of the particular maximum value as actual values.

11. Regulating system according to claim 2, characterised in that the ground pressure indicator (34) indicates the respective distance between the hydraulic cylinder (31) and an abutment on which the hydraulic cylinder (31) is supported by means of a pressure spring (35).

12. Regulating system according to one of the preceding claims, characterised in that the control device (STD) is a program-controlled processor to which the generator signals (SB, SR, SL, FNG, SV, SH) are supplied via a controllable multiplexer (MPX) with a downstream analogue-to-digital converter (AD) and to which on the input side timing signals from a clock (CL) , the signals from the control contacts (KR, KL, KH, KT), input contacts (TE, TA) and a travel speed signal (FGS) are supplied and which on the output side triggers the valves (VR, VL, VH, VT).

13. Regulating system according to claim 12, characterised in that a first sub-routine cyclically interrogates, evaluates and stores the input signals, a second subroutine compares the actual and nominal values, taking account of a given preset hysteresis value, and depending on the comparison activates the valve control outputs.

14. Regulating system, according to claim 13, characterised in that when the control contacts (KR, KL, KH, KT) are cyclically interrogated, the respective associated output is at least briefly deactivated compared to the valve reaction time.

15. Regulating system according to claim 14, characterised in that a series of scanning pulses from the control contacts (KH, KT) is evaluated for closure and opening times and whenever a first preset series of pulses occurs the particular associated actual value measured is stored as the nominal value, which in each case in response to the occurrence of another scheduled series of pulses is alternately programmed for subsequent regulation or not programmed further.

16. Regulating system according to claim 13, characterised in that in response to the actuation of one of the input contacts (TE) a first or second operating condition is programmed, in the first condition the ground pressure signal (SB) and in the second an elevational position signal (SH) from the cutter apron (2) and if appropriate an elevation signal (SV) from the ground sensors (40 - 43) being supplied to form an actual value and also the nominal ground pressure signal (SG) or a nominal elevation value (SH) being supplied for regulation of the cutting height, and the respective operating condition being in each case displayed on a display lamp (LB, LL).

17. Regulating system according to claim 13, characterised in that the input signals, assigned to the outputs respectively enabled at least briefly in relation to a valve reaction tine, are firstly evaluated in respect of a lower threshold value, thereby establishing, storing and indicating an absent valve function and valve voltage supply in the event of the threshold value not being met, and secondly evaluated in respect of an upper threshold value, thereby detecting an overload of the output switches in the event of the threshold value being exceeded, which is then used for disabling the output signal and fault indication.

18. Regulating system according to claim 13, characterised in that the thermal valve loads are constantly established by respective accumulation of the valve on-times, in each case reducing the accumulated value by a component proportional to the accumulated load, and if a preset load limit is exceeded the valve is de-energised and this fact signalled.

**19.** Regulating system according to claim 18, characterised in that in response to the respective valve load found and/or to the travel spead signal (FGS) the programmed hysteresis values and/or the control delays are programmed, after which in each case the valve is re-energised.

**20.** Regulating system according to one of claims 12 to 19, characterised in that the on- and off-times of the various controller outputs are compared by autocorrelation over preset time intervals and the associated hysteresis values and/or the associated control delays are modified in response to the magnitude of the periodicity.

**21.** Regulating system according to one of claims 12 to 20, characterised in that the regulations are performed with a proportional-plus-integral-plus-derivative characteristic by comparing the respective actual value with the nominal value (W) in a cyclical sub-routine and the change over time (DX) in the actual value is respectively compared with a second comparison value (W2) and a chronological integrated measurand (IX) continually formed over a respective preset integration period by summation of the respective changes (DX) is compared in each case with a third comparison value (W3), and if the nominal value (W) is not met the controller output is activated, but in the event of the two comparison values (W2, W3) being simultaneously exceeded the respective controller output is deactivated and furthermore if the threshold value (W) is exceeded the controller output is deactivated, but of the two comparison values (W2, W3) are simultaneously not met the controller output is activated.

**22.** Regulating system according to one of claims 12 to 21, characterised in that after each activation of a output signal the associated generator signal (SB, SR, SL) is measured after a first waiting period (T1) longer than a controller reaction time has elapsed, and compared to the previous generator signal (I1) in respect of a tolerance value (DW) and then, if such a change has taken place, this is followed by comparison with a stored final value (IE) and, if the final value (IE) has been met, following a further waiting time (T2) an actual value (I3) is again measured and again compared with the final value (IE) and, if this actual value (I3) deviates therefrom, this value is stored as the final value (IEN) to be used subsequently, and also in that if the comparison after the first waiting time (T1) has revealed no change, the measured actual value (12) is compared with the stored final value (IE) and, if this reveals a difference, the value is stored as the new final value (IEN), whenever the nominal value is met or if the final value (IE) has been met the associated controller output being deactivated before the program routine is exited.

**23.** Regulating system according to one of claims 12 to 22, characterised in that the respective measured generator values (SB, SL, SR) are compared with the upper and lower preset limit values, if the latter are exceeded or not met no further evaluation of the relevant generator value is pursued and a substitute variable is programmed, and in any other instance the generator values (SB, SL, SR) are standardised in relation to the respectively stored upper and lower final values (IE) on the basis of zero position and range size and are supplied linearised for regulation.

**24.** Regulating system according to one of claims 12 to 23, characterised in that all instances where threshold values are exceeded and all final value operating conditions are statistically recorded and switching frequencies and on-times are accumulated and recorded and stored, enabling them to be called up by the operator onto a display device (AA) by an output program unit, and in that the standardised ground pressure values and/or elevational position values are constantly indicated to the operator on the display device (AA).

**Revendications**

**1.** Dispositif de régulation de la position d'une barre de coupe d'une moisonneuse automotrice, avec tablier de coupe, à commande hydraulique, réglable en hauteur et pivotable transversalement par rapport au sens de marche, et pourvu, latéralement, de détecteurs de garde au sol, dont les signaux sont conduits à un dispositif de commande aux fins de régulation d'un pivotement transversal au sens de marche, caractérisé par le fait
que la différence des signaux de garde au sol (SR, SL) sont utilisés pour la régulation du pivotement et que la valeur moyenne des signaux de garde au sol (SR, SL) forme un pourcentage de la valeur effective pour la régulation de la hauteur de coupe du tablier de coupe (2).

2. Dispositif de régulation selon revendication 1, caractérisé par le fait
que le tablier de coupe (2) ou une conduite hydraulique de hauteur de coupe (A) est équipée d'un transmetteur de pression du sol (34), dont le signal de pression du sol (SB), en relation avec une valeur moyenne des signaux de garde au sol (SR, SL), sert de valeur effective pour le réglage de la hauteur de coupe.

3. Dispositif de régulation selon revendication 2, caractérisé par le fait
que le signal de pression du sol (SB) forme environ 80% et la valeur moyenne environ 20% de la valeur effective.

4. Dispositif de régulation selon l'une des revendications précédentes, caractérisé par le fait qu'un signal d'inclinaison du châssis (FNG) est conduit au réglage du tamis vibrant tout comme au reglage du pivotement en tant que composante de la valeur effective, de sorte qu'un pivotement opposé est effectué.

5. Dispositif de régulation selon l'une des revendications précédentes,
caractérisé par le fait
que le dispositif de commande (ST) est composé de comparateurs (V1, V2) en rapport avec l'hystérésis, dont les sorties communient avec les vannes électromécaniques (VT, VH; VL, VR) du système hydraulique, qui commandent les vérins hydrauliques pour la hauteur de coupe (30, 31) et les dispositifs de pivotement hydrauliques (20, 21) pour le pivotement à gauche ou à droite.

6. Dispositif de régulation selon revendication 5, caractérisé par le fait
que les sorties des comparateurs (V1, V2) sont protégées par verrouillage contre une activation simultanée.

7. Dispositif de régulation selon revendication 5 ou 6,
caractérisé par le fait
que des contacts de commande (KT, KH; KL, KR), actionnables à la main, sont montés en parallèle par rapport aux sorties des comparateurs.

8. Dispositif de régulation selon revendication 1, caractérisé par le fait
que les détecteurs de garde au sol (40 - 47) consistent en sondes ultrasoniques, parallèles au sens de marche, ou en palpeurs élastiques en forme d'arceaux (40, 41; 42, 43), dont l'intervalle est supérieur à la largeur d'une ornière ou d'un sillon, et qui sont reliés, deux par deux, par commutation de signal de crête ou par un arbre de jumelage (44,45), l'angle d'orientation étant transmis an des potentiomètres (46, 47).

9. Dispositif de régulation selon revendication 1, caractérisé par le fait que les détecteurs de garde au sol (40 - 49), équipant le support d'une barre de coupe flexible (2), sont composés de patins (40A, 41A) parallèles, fixés à des bras de pivotement (48) et dont la position de pivotement est communiquée, par l'intermédiaire de bras de leviers (49), à un arbre de transmission (44A), dont l'angle d'orientation est communiqué au potentiomètre de palpage (46A), et
que les positions de pivotement de tous les patins (40A, 41A) sont communiquées à un autre arbre de transmission, quant à la position respective de patin (40A, 41A) la plus élevée, et que le contournement respectif d'arbre de transmission est communiqué à un potentiomètre de hauteur.

10. Dispositif de régulation selon revendication 1, caractérisé par le fait
que les palpeurs en forme d'arceaux (40, 41) ou les patins (40A, 41A) sont respectivement reliés à un potentiomètre de palpage, dont les signaux de détection, respectivement coordonnés deux à deux, sont évalués en tant que valeurs réelles quant à la valeur maximale respective.

11. Dispositif de régulation selon revendication 2, caractérisé par le fait
que le transmetteur de pression du sol (34) signale l'intervalle respectif entre le vérin hydraulique (31) et une butée sur laquelle s'appuie le vérin hydraulique (31), par l'intermédiaire d'un ressort de pression (35).

12. Dispositif de régulation selon l'une des revendications précédentes, caractérisé par le fait
que le dispositif de commande (STD) est un processeur commandé par programme, auquel les signaux (SB, SR, SL, FNG, SV, SH) sont conduits, par l'intermédiaire d'un multiplexeur contrôlable (MPX), avec un convertisseur analogique numérique (AD) en aval, auquel les signaux d'une horloge (CL), les signaux des contacts de commande (KR, KL, KH, KT), contacts d'entrée (TE, TA) et un signal de vitesse de marche

EP 0 331 893 B1

(FGS) sont conduits, côté entrée, et lequel excite, côté sortie, les vannes (VR, VL, VH, VT).

13. Dispositif de régulation selon revendication 12, caractérisé par le fait
qu'une première partie du programme interroge, évalue et mémorise, cycliquement, les signaux d'entrée, et qu'une second partie du programme compare les valeurs effectives et de consigne, compte tenu d'une valeur d'hystérésis respectivement prédéterminée, et active les sorties de commande des vannes en fonction de la comparaison.

14. Dispositif de régulation selon revendication 13, caractérisé par le fait
que, lors de l'interrogation cyclique des contacts de commande (KR, KL, KH, KT), la sortie afférente, respective, comparée, tout au moins brièvement, quant au temps de réaction des vannes, est désactivée.

15. Dispositif de régulation selon revendication 14, caractérisé par le fait
qu'une série d'impulsions des contacts de commande (KH, KT) sont évalués d'après les temps de fermeture et d'ouverture et que, lors de chaque première série d'impulsions prédéterminée, la valeur réelle afférente, respectivement mesurée est mémorisée en tant que valeur de consigne, qui est, alternativement allouée ou non plus allouée, respectivement en dépendance de l'intervention d'une autre série d'impulsions, pour la régulation suivante.

16. Dispositif de régulation selon revendication 13, caractérisé par le fait
qu'un premier ou un second état de marche est prédéterminé, en dépendance de l'actionnement de l'un des contacts d'entrée (TE); dans le premier état de marche, le signal de pression du sol (SB) et dans le second état de marche, un signal de positionnement en hauteur du tablier de coupe (2) et, le cas échéant, un signal de hauteur (SV) des détecteurs de garde au sol (40 - 43), formant une valeur effective , ainsi que le signal de consigne de pression du sol (SG) ou, respectivement, une valeur de consigne de hauteur (SH) sont conduits aux fins de régulation de la hauteur de coupe, l'état de marche en question étant respectivement indiqué par un voyant-témoin (LB, LL).

17. Dispositif de régulation selon revendication 13, caractérisé par le fait
que les signaux d'entrée, coordonnés aux sorties, respectivement en connexion, tout au moins brièvement, par rapport à un temps de réaction des vannes, sont, évalués, premièrement, en ce qui concerne une valeur de seuil inférieure, de sorte qu'un manque de fonctionnement de vanne ou d'alimentation en courant, est constaté, mémorisé et signalé, lors d'un souspassement de la valeur de seuil, et, deuxièmement, une surcharge des commutateurs de sortie est constatée lors d'un surpassement de la valeur de seuil, ce qui est exploité pour la mise hors circuit du signal de sortie et un message d'erreur.

18. Dispositif de régulation selon revendication 13, caractérisé par le fait
que les sollicitations thermiques des vannes sont détectées par l'accumulation respective des durées de connexion des vannes, compte tenu d'une réduction respective de la valeur d'accumulation proportionnellement à la charge accumulée, et qu'une mise hors circuit et une signalisation ont lieu en cas de surpassement d'une valeur limite de charge prédéterminée.

19. Dispositif de régulation selon revendication 18, caractérisé par le fait
que les valeurs d'hystérésis et/ou les temps de retard de réglage, d'après lesquels une nouvelle connexion des vannes a lieu, sont prédéterminées en dépendance de la charge des vannes, respectivement détectée et/ou du signal de vitesse de marche (FGS).

20. Dispositif de régulation selon l'une des revendications 12 à 19,
caractérisé par le fait
que les temps de connexion et de déconnexion des différentes sorties de régulation sont comparés, pendant des laps de temps prédéterminés, par autocorrélation et les valeurs d'hystérésis afférentes et /ou les temps de retard de réglage afférents sont modifiés en dépendance de la mesure de la périodicité.

21. Dispositif de régulation selon l'une des revendication 12 à 20,
caractérisé par le fait
que les régulations sont effectuées avec une caractéristique proportionnelle, différentielle et intégrale, la valeur effective (X) respective étant comparée avec la valeur de consigne (W), dans le cadre d'un programme partiel, exécuté cycliquement, et la variation dans le temps (DX) de la valeur effective est comparée avec une seconde valeur comparative (W2) et une valeur intégrale (IX), formée continuellement,

13

pendant un temps d'intégration prédéterminé, par totalisation des variations (DX) respectives est comparée avec une troisième valeur comparative (W3), la sortie du régulateur étant activée lorsque la valeur de consigne (W) est souspassée, tandis que lors du surpassement simultané des deux valeurs comparatives (W2, W3), la sortie du régulateur est respectivement désactivée; de plus, lors du surpassement de la valeur de seuil (W), la sortie de régulation est désactivée, tandis qu'elle est activée lors du souspassement simultané des deux valeurs comparatives (W2, W3).

22. Dispositif de régulation selon l'une des revendications 12 à 21,
caractérisé par le fait
qu'après chaque activation d'un signal de sortie, le signal transmetteur afférent (SB, SR. SL), est mesuré, après écoulement d'un premier temps d'attente (T1), plus long qu'un temps de réaction de régulation, et comparé avec le signal transmetteur précédent (T1) quant à une valeur de tolérance (DW), puis, en cas d'une telle variation, comparé avec une valeur finale mémorisée (IE); si la valeur finale (IE) est atteinte, une nouvelle mesure d'une valeur effective (I3) a lieu, après un autre temps d'attente (T2), et une nouvelle comparaison est effectuée entre cette valeur effective (I3) et la valeur finale (IE). Lorsque la valeur effective (I3) en diverge, cette valeur est mémorisée en tant que valeur finale (IEN) à utiliser plus tard.

23. Dispositif de régulation selon l'une des revendications 12 à 22,
caractérisé par le fait
que les valeurs des transmetteurs (SB, SL, SR), respectivement mesurées, sont comparées avec des valeurs de limite supérieure et inférieure, prédéterminées. En cas de surpassement ou de souspassement de ces valeurs limites, l'évaluation suivante de la valeur concernée n'a pas lieu et une valeur de remplacement est prédéterminée. Dans le cas contraire, les valeurs (SB, SL, SR), normalisées selon la position zéro et la grandeur de champ et linéarisées quant aux valeurs finales (IE) supérieures et inférieures respectivement mémorisées, sont conduites à la régulation.

24. Dispositif de régulation selon l'une des revendications 12 à 23, caractérisé par le fait
que tous les surpassements de valeurs limites et états de marche de valeurs finales sont chiffrés statistiquement et que les fréquences et les temps de commutation totalisés sont saisis et mémorisés de sorte à pouvoir être appelés par l'opérateur, à l'aide d'une partie de programme, et affichés sur un dispositif de visualisation (AA) et que les valeurs de pression du sol normales et/ou les valeurs de positionnement en hauteur sont exposées, continuellement à l'opérateur sur le dispositif de visualisation (AA).

14

Fig. 1

Fig. 2

Fig. 3

Fig. 5

Fig. 4

Fig. 6